**Europäisches Patentamt**

**European Patent Office**

**Office européen des brevets**

(19)

(11) Veröffentlichungsnummer: **0 031 015**
**B1**

(12) # EUROPÄISCHE PATENTSCHRIFT

(45) Veröffentlichungstag der Patentschrift:
21.09.83

(51) Int. Cl.³: **G 02 F 1/133**

(21) Anmeldenummer: **80106800.8**

(22) Anmeldetag: **05.11.80**

(54) **Anordnung zur Ansteuerung und Kontrolle des Betriebes einer elektro-optischen Datenanzeige, bestehend aus Flüssigkristallanzeigeelementen (LCD-Anzeige).**

(30) Priorität: **21.12.79 DE 2951584**

(43) Veröffentlichungstag der Anmeldung:
**01.07.81 Patentblatt 81/26**

(45) Bekanntmachung des Hinweises auf die Patenterteilung:
**21.09.83 Patentblatt 83/38**

(84) Benannte Vertragsstaaten:
**DE FR GB SE**

(56) Entgegenhaltungen:
**DE-A-2 402 749**
**DE-A-2 449 740**
**DE-A-2 459 488**
**DE-A-2 532 421**
**DE-A-2 743 907**
**DE-A-2 750 659**
**GB-A-1 428 326**

(73) Patentinhaber: **Kienzle Apparate GmbH,**
**Heinrich-Hertz-Strasse Postfach 1650,**
**D-7730 Villingen-Schwenningen (DE)**

(72) Erfinder: **Appenrodt, Jürgen, Langes Gewann 37,**
**D-7730 Villingen-Schwenningen 22 (DE)**

ACTORUM AG

Anordnung zur Ansteuerung und Kontrolle des Betriebes einer elektro-optischen Datenanzeige,
bestehend aus Flüssigkristallanzeigeelementen (LCD-Anzeige)

Die Erfindung betrifft eine Anordnung zur Ansteuerung und Kontrolle des Betriebes einer Elektro-optischen Datenanzeige, bestehend aus Flüssigkristallanzeigeelementen (LCD-Anzeige) zur Darstellung von Ziffern oder Zeichen über die Aktivierung einer Anzahl getrennt ansteuerbarer Segmente.

Schon seit Jahren befinden sich eine Vielzahl von elektrooptischen Datenanzeigen im Handel und werden auf breiter Ebene zur Darstellung von optischen Informationen, wie Ziffern, Zeichen und dergl. eingesetzt. Eine verbreitete Ausführungsform stellt die Flüssigkristallanzeige (LCD) dar, die in einem typischen Anwendungsfall als 7-Segment-Display in Geräten mit digitaler Anzeige eingesetzt wird. Das Grundprinzip einer Flüssigkristallzelle besteht bekanntlich darin, dass zwei Glasplatten an den einander zugekehrten Flächen mit durchsichtigen, leitenden Schichten bedeckt sind. Zwischen den Platten befindet sich eine nematische kristalline Flüssigkeit, die beim Anlegen einer Spannung an die Dünnschichtelektroden unter dem Einfluss des elektrischen Feldes Zonen mit verschiedenem Brechungsindex bilden. Je nach Ausbildung der Struktur der einen durchsichtigen Elektrode lässt sich die Flüssigkristallzelle zur Dartellung von Ziffern, Buchstaben oder sonstigen Informationen verwenden. Nach der Art der Verwendung kann das Flüssigkristall-Display in Reflexions- oder Transmissionsbauweise ausgeführt werden, je nachdem auffallendes oder durchgehendes Licht gestreut werden soll. Von den aktiven Displays unterscheiden sich die passiven Displays, wie die Flüssigkristallzelle, grundsätzlich dadurch, dass sie kein eigenes Licht erzeugen, sondern lediglich Fremdlicht modulieren. Als besonders vorteilhaft zu bezeichnen ist unter anderem bei den Flüssigkristallzellen die sehr geringe Stromaufnahme. Diese sehr geringe Stromaufnahme der Flüssigkristallanzeigen hat aber zur Folge, dass eine Segmentkontrolle praktisch nicht möglich ist. Während bei aktiven Displays, wie beispielsweise LED-Anzeigen, eine Kontrolle der Darstellung der Informationen insofern einfach ist, dass man die einzelnen Segmentströme misst und rückwirkend mit der angebotenen Information vergleicht und daraus erforderlichenfalls ein Fehlersignal ableitet, führt eine gleichermassen angewandte Segmentkontrolle bei passiven Anzeigen, wie die Flüssigkristallanzeigen, zu keinem brauchbaren Ergebnis. Schuld daran sind die sehr viel geringeren und relativ stark streuenden Segmentströme. Zur Schaffung einer erhöhten Sicherheit in der Zeichendartellung hat man die Möglichkeit einer redundanten Darstellung wie aus der DE-A 24 02 749 bekannt ist oder als Massnahme der Sicherung der Anzeige eine weitergehende Segmentierung der einzelnen Zeichensymbole (DE-A 24 59 488) in Erwägung gezogen. Diese Massnahmen bringen jedoch wiederum einen ganz erheblichen Herstellungs- und Schaltungsaufwand mit sich. Um diesem unbefriedigenden Zustand bei Flüssigkristall-Displays zu begegnen, wird gemäss den Darlegungen aus der DE-A 27 43 907 vorgeschlagen, dass die Vorderplatte zusätzliche Elektroden (Kontrollelektroden) trägt, die jeweils mit einer derjenigen Segmentelektroden («gefährdete Segmentelektroden») elektrisch verbunden sind, bei deren Ausfall oder Fehlansteuerung ein anderes mögliches Zeichen aus dem Zeichenvorrat des Display dargestellt wird und dass die Rückplatte eine Rückelektrode («Kontrollelektrode») enthält, die nur den Kontrollelektroden gegenüberliegt. Diese Massnahme bedeutet jedoch, dass praktisch alle sog. gefährdeten Segmentelektroden, das sind bei einer 7-Segment-Ziffernanzeige wenigstens 5 Segment-Elektroden, zusätzlich jeweils mit einer Kontrollelektrode verbunden sind und dass auch die Rückplatte des Displays eine zusätzliche «Kontrollrückeelektrode» enthält, die ausschliesslich mit den Kontrollelektroden zusammenwirkt. Ausser den sonst üblichen 7-Segment-Elektroden und einer Rückelektrode sind für den vorgeschlagenen Kontrollgang zusätzlich 5 Kontrollelektroden und eine Kontrollrückelektrode vorzusehen und auf der Trägerplatte unterzubringen. Dieser Aufwand ist erheblich und bringt aufgrund der grossen Anzahl der getrennt geführten elektrischen Verbindungen eine entsprechend grosse Fehlerquelle für die Kontaktierung mit sich. Ausserdem stellt die Ausführungsform mit den Kontrollelektroden eine aufwendige Sonderausführung dar und für die Anzeige-Displays der herkömmlichen Art wird dadurch keine Anzeigekontrollmöglichkeit bereitgestellt.

Als Verbindungselement ist eine elektrische, anisotrope Widerstandsschich zum Beispiel aus der DE-A 27 50 659 bekannt. Eine derartige elektrisch anisotrope Widerstandsschicht besteht aus einer Tafel, bei der der Widerstand in Richtung der Tafelebene praktisch unendlich gross ist, wohingegen der Widerstand in Richtung der Normalen der Tafel praktisch vernachlässigbar ist. Die leitenden Elemente in richtung der Normalen können beispielsweise aus Kohlefasern oder Metallfasern bestehen, die in Richtung der Tafelebene durch ein Polymer gegeneinander isoliert sind. Gemäss der Dartellung wird in der bezeichneten Schrift bei einem durch elektrische Signale betriebenen Flachbildschirm die elektrische Verbindung zwischen den Treiberschaltungsmodulen und den Bildpunktelektroden über eine elektrisch anisotrope Widerstandsschicht realisiert. Entsprechend sind auf der einen Oberfläche der anisotropen Widerstandsschicht die Bildpunktelektroden und auf der gegenüberliegenden Seite die Treiberschaltungsanordnung vorgesehen.

Analysiert man allgemein die prinzipiell möglichen Fehlerursachen und deren Auswirkungen eines Anzeigesystems der vorbezeichneten Art, so lassen sich die eigentlichen Fehlerquellen lokalisieren auf Ursachen, die abgrenzbar im Bereich des Anzeigeelementes oder aber elektrisch davor im Bereich der Ansteuerung zu finden sind. Um nur auf einige Fehlerquellen hinzuweisen, die teils auf Unstimmigkeiten in der Fertigung oder auf jedem Bauteil anhaftende Alterungserscheinungen zurückzuführen sind, gibt es dafür sichtbare Auswirkungen in der Darstellung der Zeichenelemente. Bei beispielsweise Alterung, undichter Medium-Zelle, Über- oder Unterschreifung der zulässigen Temperaturbereiche, bei Glasbruch, Zerstörung der Polarisatoren und dergl. wirken sich die Folgeerscheinungen unmittelbar auf alle Segmente bzw. auf den gesamten Anzeigebaustein aus. Durch derartige schadhafte Erscheinungen direkt an der Anzeige sind immer alle Anzeigeelemente betroffen, so dass ein Fehler optisch sichtbar in Erscheinung tritt.

Nicht augenscheinliche Anzeigefehler dagegen bedeuten für den Betrachter eine nicht erkennbare Fehlanzeige. Eine derartige Fehlanzeige entsteht fast ausschliesslich durch Fehler in der Ansteuerung, wenn dadurch im Laufe des Anzeigebetriebes einzelne Segmente ausfallen oder fälschlicherweise aktiviert werden. Die Ursachen für derartige Fehler sind zu finden z. B. in einem defekten Ansteuerungs-IC, schadhaften Leiterbahnen, insbesondere Ausfall einzelner Ansteuerleitungen, fehlerhafte Kontaktierung zum Anzeigebaustein usw. Da gerade die zuletzt genannten Fehlerquellen zu den optisch nicht wahrnehmbaren Fehlanzeigen führen, ist es auch eine unabdingbare Forderung, bei einer behördlichen Zulassung von eichfähigen Geräten, wie z. B. Taxametern, Geld- und Literzählern als praktischer Anwendungsfall und dergl., dass gerade die augenscheinlich nicht wahrnehmbaren Fehlanzeigen durch Kontrolleinrichtungen überwacht und gemeldet werden.

Aufgabe der Erfindung ist es, eine einfache Anordnung zur Ansteuerung und Kontrolle des Betriebes einer elektro-optischen Datenanzeige, bestehend aus Flüssigkristallanzeigeelementen (LCD) zu schaffen, um vornehmlich eine optisch nicht wahrnehmbare Fehlanzeige erkennbar zu machen.

Die Lösung der Aufgabe besteht darin, dass jede Segmentelektrode durch eine elektrisch anisotrope Widerstandsschicht, die in Richtung ihrer Normalen leitend, in Richtung ihrer Ebene isolierend und zwischen der Segmentelektrode und einer Leiterplatte angeordnet ist, gesplittet mit wenigstens zwei getrennten Leiterbahnen der Leiterplatte verbunden ist, wobei die Verbindung der Segmentelektrode über eine erste Leiterbahn als Durchsteuerleitung für die Zeicheninformation dient, während die Verbindung der gleichen Segmentelektrode über eine zweite Leiterbahn als Kontrollesteuerleitung für die Überwachung des gesamten Ansteuerweges einschliesslich Kontaktierung dient.

Durch die Anordnung lässt sich jede Flüssigkristallanzeige der herkömmlichen Art mit einer Überwachungs- und Kontrolleinrichtung in Verbindung bringen. Neben den an sich optisch wahrnehmbaren Störungen aus ursächlich innerlichen Schäden in einer LC-Zelle kann man gemäss der vorgeschlagenen Lösung mit dem geringsten Aufwand eine Kontrolle auch der gesamten Ansteuerungswege einschliesslich der Kontaktierungen durchführen. Vor allem lässt sich mit der Anordnung ein Fehlanzeigeverhalten aufklären, das durch keinerlei Anzeichen für den Beobachter wahrnehmbar ist. Dies gilt insbesondere für den Bereich, wo durch irgendwelche Fehler, beispielsweise in der Kontaktierung, Segmentsignale zwischen Ansteuerelektronik und Display ausfallen oder zusätzlich in das Display einfliessen, was in den meisten Fällen dann unbemerkt zur Anzeige einer falschen Zahleninformation führt. Es wird keine zusätzliche Forderung an den Aufbau und die Kontaktierung der LCD-Anzeige-Bausteine gestellt. Durch die Splittung der Kontaktierung der Segmentelektroden wird ein optimaler Wirkungsgrad in bezug auf den Hin- und Rückfluss der Segmentsignale erzielt. Ohne wesentlichen Aufwand oder Mehrbelastung für die Anzeigebausteine lässt sich eine wirkungsvolle Kontrolle bei uneingeschränkter Beibehaltung der üblichen Ansteuerungsqualität erzielen. Selbstredend eignet sich die vorgeschagene Lösung auch uneingeschränkt für eine mehrfache parallele Durchsteuerung von Ansteuersignalen in ein Display zur erhöhten Absicherung der Anzeigeinformation.

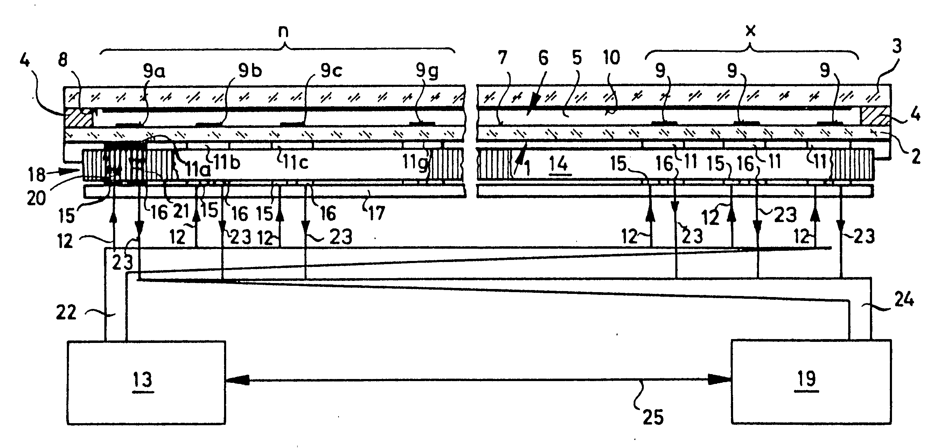

Ein Ausführungsbeispiel der Erfindung wird unter Bezugnahme auf die in der Zeichnung dargestellte, schematisierte Anordnung einer LCD-Anzeige einschliesslich der Schaltungsmittel zur Ansteuerung und Kontrolle des Betriebes der Anzeigemittel nachfolgend beschrieben.

In der Zeichnung ist in einer schematisierten Darstellungsform eine mehrstellige Ziffernanzeige zur Anzeige von n-Ziffern auf der Basis einer Flüssigkristallzelle (LCD) gezeigt. Eine LCD- oder Flüssigkristallanzeige 1 der vorbezeichneten Art besteht im wesentlichen aus einer Frontglasplatte 2 und einer Rückglasplatte 3, die in exakter, paralleler Abstandslage zueinander mit einem Distanzrahmen 4 miteinander verbunden sind. Durch die Anordnung der Glasplatten 2 und 3 mit dem Distanzrahmen 4 entsteht eine Zelle 5, die mit einem Medium aus nematisch flüssigen Kristallen oder einer sog. Flüssigkristallsubstanz 6 gefüllt ist und so eine entsprechend dünne LC-Schicht bildet. Die beiden Glasplatten 2 und 3 sind auf ihren inneren, einander zugewandten Flächen 7 und 8 mit getrennt ansteuerbaren Elektrodenschichten belegt, von denen mindestens eine der leitenden Elektrodenschichten transparent ist. Bei den beiden sich gegenüberliegenden Elektrodenschichten unterscheidet man zwischen sog. Segmentelektroden 9 auf der Innenfläche der Frontglasplatte 2 und einer sog. Rückelektrode 10 auf der inneren Fläche 8 der Rückglasplatte 3. Bei einer für die Darstellung von Ziffern ausgelegten Flüssigkristallanzeige tragen die Segmentelektroden 9 die Struktur von sieben getrennt ansteuerbaren Segmenten, die sich in bekannter Weise zu dem Ziffernbild einer «8» ergänzen. Die einzelnen Segmente 9 eines Zifferndisplays für die Darstellung einer Zahl tragen die fest eingeführten Bezeichnungen der Buchstabenreihe a bis g, beginnend mit dem oberen Querbalken einer «8», fortlaufend im Uhrzeigersinn für die Darstellung der «0» und endet schliesslich bei der den ganzen Zeichenvorrat abschliessend umfassenden «8» mit dem mittleren Querbalken, der die Bezeichnung g trägt. Jede Segmentelektrode 9a bis 9g ist mit einer eigenen Zuleitung versehen, die ähnlich einer Leiterbahn beispielsweise auf der Frontglasplatte 2 nach aussen geführt ist und dort als Segmentkontakt 11 in der Form einer metallisierten Fläche ausgebildet ist. Die flächenhaften Segmentkontakte 11 sind selbstredend durch bestimmte Abstände voneinander isoliert angeordnet. Die für eine Flächenverbindung ausgebildeten Segmentkontakte 11 tragen übereinstimmend mit der Verbindung zu den Segmentelektroden 9a bis 9g innerhalb der LCD-Anzeige gleichfalls die Bezeichnungen a bis g. In der Regel werden die Segmentkontakte 11 über Steckverbinder oder dergl. mit einer Ansteuerleitung 12 zur Einspeisung von Informationen aus einer Ansteuerelektronik 13 verbunden. Um einen Weg zu finden, den momentanen Zustand einer Segmentelektrode 9 ständig zu prüfen, ist es erforderlich, die zur Bildung einer Information aus einer Ansteuerelektronik 13 in das Display 1 einfliessenden Ansteuersignale zu überwachen, rückwirkend in eine Überwachungseinheit 19 zu übernehmen und so einen Vergleich des Ansteuersignals mit dem Überwachungssignal durchzuführen. Hierzu ist die Voraussetzung für einen gleichzeitigen, aber voneinander elektrisch getrennt geführten Zu- und Rückfluss von Informationssignalen an die zeichenbildenden Segmentelektroden 9 zu schaffen. Eine Lösung, über eine einzige Verbindung der Segmentelektrode 9 einen gleichzeitigen Hin- und Rückfluss von Informationssignalen zu gewährleisten ist dadurch gegeben, dass jede Segmentelektrode 9 durch eine elektrisch anisotrope Widerstandsschicht 14, gesplittet mit wenigstens zwei getrennten Leiterbahnen 15, 16 einer Leiterplatte 17 verbindbar ist, wobei die Verbindung der Segmentelektrode 9 über eine erste Leiterbahn 15 als Durchsteuerleitung für die Zeicheninformation dient, während die Verbindung der gleichen Segmentelektrode 9 über eine zweite Leiterbahn 16 als Kontrollsteuerleitung für die Überwachung des gesamten Ansteuerweges einschl. Kontaktierung dient.

In der Praxis sieht eine entsprechende Anordnung, wie in einem Beispiel gemäss der Zeichnung dargestellt ist, so aus, dass zur Kontaktierung von Segmentelektroden 9 über ausserhalb einer Flüssigkristallzelle 5 geführte Segmentkontakte 11 an einer Flüssigkristallanzeige (LCD-Anzeige) 1 eine Leiterplatte 17 vorgesehen ist, deren den Flächenbereich eines jeden Segmentkontaktes 11 überdeckende Kaschierung in zwei elektrisch getrennte Leitungsführungen entsprechend der Leiterbahnen 15, 16 aufgeteilt ist, wobei eine elektrische Verbindung zwischen den Segmentkontakten 11 und den Leitungsführungen auf der Leiterplatte 17 mittels eines Schichtgummi-Zwischenverbinders 18 hergestellt ist. Die Charakteristik einer elektrisch anisotropen Widerstandsschicht erklärt sich in diesem Zusammenhang so, dass es sich hierbei um eine Schicht handelt, die in Richtung ihrer Ebene elektrisch isolierend, in Richtung ihrer Normalen elektrisch leitend ist. Eine derartige Wirkungsweise zeigt z. B. auch das unter dem Begriff «Schichtgummi-Zwischenverbinder» 18 bekannte elektrische Bauelement. Ein Schichtgummi-Zwischenverbinder 18 setzt sich bekanntlich aus nebeneinander liegenden, abwechselnd leitenden und isolierenden Elastomerschichten zusammen. Die leitfähigen Schichten oder Fasern bestehen bei bekannten Ausführungsformen beispielsweise aus Graphit, einer Silberfüllung oder dergl. und sind senkrecht zur Schichtebene ausgerichtet. Die spezifische Dichte der leitenden Fasern oder Schichten gibt die Anzahl der leitfähigen Schichten, beispielsweise pro Linearzentimeter, an. Bei grosser Dichte der leitenden Fasern kann man auf diese Weise getrennte elektrische Verbindungen in sehr gedrängter Anordnung schaffen. Die elektrischen Verbindungen lassen sich herstellen, indem man das Schichtmaterial zwischen den leitend zu verbindenden Flächen durch ein äusserliches, mechanisches Mittel komprimiert. Wie in der Zeichnung dargestellt ist, lässt sich mittels des Zwischenverbinders 18 aufgrund der mehrfachen, gegenseitig isolierten Kontaktierung eines Segmentkontaktes 11 eine Aufteilung der leitenden Verbindungen in einen Ansteuerungspfad 20 und einen Kontrollpfad 21 bereitstellen, derart dass eine über den Ansteuerungspfad 20 an die Segmentelektrode 9 angelegte Information unmittelbar über den Kontrollpfad 21 einer Überwachungseinheit 19 zuführbar ist. Will man sich in diesem Zusammenhang auf einen «Querschnitt» des Ansteuerungspfades 20 oder entsprechend des Kontrollpfades 21 zur Überleitung von Ansteuerungs- bzw. Kontrollsignalen beziehen, so wird dieser im wesentlichen bestimmt durch die flächenspezifische Kontaktierung bzw. durch die flächenspezifisch vorhandene Anzahl von leitenden Fasern in dem Material des Zwischenverbinders 18, bezogen auf die kontaktierte Fläche der Leiterbahnen 15 bzw. 16 gemäss dem Ausführungsbeispiel. Die durch ein Ausführungsbeispiel angezeigte Anordnung beschränkt sich nicht auf das Splitten der Kontaktierung in einen Anteuerungspfad 20 und einen Kontrollpfad 21; sie sind gleichfalls geeignet, in jedem Falle einer äusserst gedrängten Anordnung von Leitungsführungen eine vielfach leitende Verbindung in Zwischenverbinderzonen zu schaffen, wodurch ein sehr hohes Mass an Sicherheit in der Überleitung von Datensignalen gewährleistet wird. Diese verbreiterte Sicherheit auf der Basis einer vielfältigen Kontaktierung und entsprechender Leitungsführung in Kontaktübergangszonen kommt damit auch den hohen Anforderungen an die Funktionsqualität für geprüfte Messgeräte in weitem Masse entgegen. Die leitenden Übergangszonen über den Schichtgummi-Zwischenverbinder 18 zwischen dem Segmentkontakt 11 der LCD-Anzeige 1 und den Leiterbahnen 15 und 16 können in der Zeichnung nur stark schematisiert dargestellt werden. In Ergänzung zur Darstellung nach der Zeichnung sendet die Ansteuerungselektronik 13 Zeichensignale für die Darstellung einer Ziffer über die Ansteuerleitungen 12, die zeichnerisch in einer Ansteuerungssammelleitung 22 symbolisch zusammengefasst sind, und legt diese Signale auf entsprechende Leiterbahnen 15 auf der Leiterplatte 17 für die Eingabe in die Flüssigkristallanzeige 1. Von der Flüssigkristallanzeige 1 wird das Ansteuersignal in dargelegter Weise unmittelbar abgenommen und als Kontrollsignal über entsprechende Kontrollsteuerungsleitungen 23 und eine Kontrollsammelleitung 24 der Überwachungseinheit 19 zugeführt. Die sog. zweite Leiterbahn 16 auf der Leiterplatte 17 ist jeweils mit einer Kontrollsteuerleitung 23 verbunden und trägt mithin die Funktion der Überwachungskontrolle. Die Überwachungseinheit 19 vergleicht das abgenommene Kontrollsignal mit dem von der Ansteuerungselektronic 13 ausgehenden Ansteuerungssignal, was symbolisch durch eine Verbindungsleitung 25 angezeigt wird. Bei einer aus dem Vergleich beider Signale resultierenden Ungleichheit wird z. B. die Anzeige «blank» gesteuert oder ein anderes Störsignal aktiviert zur Anzeige irgendwelcher Störungen bzw. zur Kennzeichnung einer Fehlanzeige. Gemäss der Darstellung in der Zeichnung handelt es sich beim Ausführungsbeispiel um eine mehrstellige Flüssigkristallanzeige mit den Ziffern n bis. x. Der Zeichenvorrat einer Ziffer n besteht aus den Segmentelektroden 9a, 9b, 9c bis 9g, das ist eine sog. 7-Segment-Anzeige. Entsprechend sind alle übrigen Ziffern der Flüssigkristallanzeige 1 bis zur Dekade x aufgebaut.

## Patentansprüche:

1. Anordnung zur Ansteuerung und Kontrolle des Betriebes einer elektro-optischen Datenanzeige bestehend aus Flüssigkristallanzeigeelementen (LCD) zur Darstellung von Ziffern oder Zeichen über die Aktivierung einer Anzahl getrennt ansteuerbarer Segmente, dadurch gekennzeichnet, dass jede Segmentelektrode (9) durch eine elektrisch anisotrope Widerstandsschicht (14), die in Richtung ihrer Normalen leitend, in Richtung ihrer Ebene isolierend und zwischen der Segmentelektrode (9) und einer Leiterplatte (17) angeordnet ist, gesplittet mit wenigstens zwei getrennten Leiterbahnen (15, 16) der Leiterplatte (17) verbunden ist, wobei die Verbindung der Segmentelektrode (9) über eine erste Leiterbahn (15) als Durchsteuerleitung für die Zeicheninformation dient, während die Verbindung der gleichen Segmentelektrode (9) über eine zweite Leiterbahn (16) als Kontrollsteuerleitung für die Überwachung des gesamten Ansteuerweges einschliesslich Kontaktierung dient.

2. Anordnung zur Ansteuerung und Kontrolle des Betriebes einer elektro-optischen Datenanzeige nach Anspruch 1, dadurch gekennzeichnet, dass zur Kontaktierung der Segmentelektroden (9) über ausserhalb der Flüssigkristallzelle (5) geführte Segmentkontakte (11) an der Flüssigkristallanzeige (LCD) (1) auf der Leiterplatte (17) eine den Flächenbereich eines jeden Segmentkontaktes (11) überdeckende, in zwei elektrisch getrennte Leitungsführungen entsprechend den Leiterbahnen (15, 16) aufgeteilte Kaschierung vorgesehen ist und dass die elektrische Verbindung zwischen den Segmentkontaktes (11) und den Leitungsführungen auf der Leiterplatte (17) mittels eines Schichtgummi-Zwischenverbinders (18) hergestellt ist.

3. Anordnung nach den Ansprüchen 1 und 2, dadurch gekennzeichnet, dass über eine mehrfache Kontaktierung jeder Segmentelektrode (9) über den zugeordneten Segmentkontakt (11) und über mehrere Ansteuerleitungen (12) und Kontrollsteuerleitungen (23) auf der Leiterplatte (17) eine mehrfache, parallel angelegte Durchsteuerung einer gleichen Zeicheninformation hergestellt ist.

4. Anordnung nach Anspruch 1, dadurch gekennzeichnet, dass die elektrisch anisotrope Widerstandsschicht (14) durch einen Schichtgummi-Zwischenverbinder (18) an sich bekannter Art gebildet wird, dessen transversal zur Schichtebene verlaufende, gegenseitig isolierte, elektrisch leitende Fasern eine gesplittete Kontaktierung der Segmentelektrode (9) mit den Verbindungselementen einer Ansteuerungs- (13) und Überwachungselektronik (19) gewährleisten.

## Claims:

1. Device for calling up and checking the operation of an electro-optical data indication comprising liquid cristal indicating elements (LCD) for representing digits or signs by activating a number of segments to be separately called up characterized in that each segment electrode (9) by means of an electrically unisotropic resistant layer (14), which is conductive in its normal direction and insulating in the direction of its plane and which is arranged between the segment electrode (9) and a circuit plate (17), is splitted and connected with at least two separate lines (15, 16) of the circuit plate (17), wherein the connection of the segment electrode (9) via the first lead (15) is the calling up line for transmitting the information whilst the connection of the same segment electrode (9) via the second line (16) serves as a checking line for supervising a calling up circuit including the contacting.

2. Device for calling up and checking the operation of an electro-optical data indication according to Claim 1, characterized in that for contacting the segment electrodes (9) via segment contacts (11) conveyed thereto from outside the liquid cristal cell (5) there is at the liquid cristal indication (1) a lamination on the circuit plate (17) covering the surface of each segment contact (11) which is separated into two electrically separate leads (15, 16) and in that the electrical connection between the segment contacts (11) and the leads on the circuit plate (17) is achieved by means of a laminate rubber connection (18).

3. Device according to Claims 1 and 2, characterized in that by multiple contacting each segment electrode (9) by a segment contact (11) attributed thereto and by several calling up leads (12) and checking lines (23) on the circuit plate (17) a multiple and parallel calling up of the same data is to be achieved.

4. Device according to Claim 1, characterized in that the electrically anisotropic resistant layer (14) is in the form of a laminate rubber connector (18) of known kind the electrically conducting fibers of wich being insulated against each other and running transverse to the laminate plane allowing for splitted contacting of the segment electrode (9) with the connecting elements of a calling up (13) and checking electronic (19).

## Revendications:

1. Dispositif pour l'attaque et le contrôle du fonctionnement d'un affichage de données opto-électrique constitué d'éléments d'affichage à cristaux liquides (LCD) pour la représentation de chiffres ou de caractères par l'intermédiaire de l'activation d'un nombre de segments séparément attaquables, caractérisé par le fait que chaque électrode de segment (9) est splittée et reliée à au moins deux pistes conductrices séparées (15, 16) d'une plaque à circuits imprimés (17) par une couche résistive électriquement anisotrope qui est disposée, de façon à conduire dans le sens de sa perpendiculaire et à isoler dans le sens de son plan, entre l'électrode de segment (9) et ladite plaquette à circuits imprimés (17), la liaison de l'électrode de segment (9) par l'intermédiaire d'une première piste conductrice (15) servant de ligne d'attaque à l'information de caractères, alors que la liaison de la même électrode de segment (9) par l'intermédiarie d'une deuxième piste conductrice (16) sert de ligne de contrôle pour la surveillance de l'ensemble du parcours d'attaque y compris l'établissement de contact.

2. Dispositif pour l'attaque et le contrôle du fonctionnement d'un affichage de données opto-électrique conformément à la revendication 1, caractérisé par le fait que, pour l'établissement de contact des électrodes de segment (9), par l'intermédiaire de contacts de segment (11) amenés à l'extérieur de la cellule à cristal liquide (5), à l'affichage à cristaux liquides (LCD) (1), une feuille métallique est prévue sur la plaquette à circuits imprimés (17) recouvrant la surface de chacun des contacts de segment (11) et étant répartie en deux lignes électriques séparées conformément aux pistes conductrices (15, 16) et que la liaison électrique entre les contacts de segment (11) et les lignes électriques sur la plaquette à circuits imprimés (17) est établie au moyen d'un interconnecteur en caoutchouc lamellé (18).

3. Dispositif conformément à l'une quelconque des revendications 1 et 2 caracterisé par le fait que, par l'intermédiaire de contacts multiples de chaque électrode de segment (9) par l'intermédiaire du contact de segment associé (11) et par l'intermédiaire de plusieurs lignes d'attaque (12) et lignes de contrôle (23) sur la plaquette à circuits imprimés (17), est réalisé un transfert multiple de disposition parallèle d'une même information de caractère.

4. Dispositif conformément à la revendication 1, caractérisé par le fait que la couche résistive électriquement anisotrope (14) est constituée, d'une manière en soi connue, par un interconnecteur en caoutchouc lamellé (18) dont les fibres électriquement conductrices, réciproquement isolées et de parcours transversal par rapport au plan de couche, assurent un établissement de contact splitté de l'électrode de segment (9) avec les éléments de liaison d'une électronique d'attaque (13) et de surveillance (19).

0 031 015